# FASCICULE DE BREVET EUROPEEN

(11) **EP 0 915 546 B1**
(45) Date de publication et mention de la délivrance du brevet: **27.11.2002**
(21) Numéro de dépôt: 98402715.1
(22) Date de dépôt: 30.10.1998
(51) Int. Cl.: H02B 13/035

(54) **Ligne électrique à isolation gazeuse et à condensateur de puissance incorporée**
Gasisolierte Hochspannungsleiter mit integriertem Leitungskondensator
Gas insulated high voltage line with integrated power capacitor

(30) Priorité: 06.11.1997 FR 9713983
(43) Date de publication de la demande: 12.05.1999
(73) Titulaire: GEC ALSTHOM T & D SA, 75116 Paris (FR)
(72) Inventeur: Pham, Van Doan, 69330 Meyzieu (FR); Guillen, Marcel, 38200 Vienne (FR); Collet, Michel, 69003 Lyon (FR)
(74) Mandataire: Gosse, Michel

(56) Documents cités:
- EP-A- 0 417 813
- EP-A- 0 750 380
- DE-U- 9 016 540
- FR-A- 2 685 562
- GB-A- 2 273 615
- US-A- 4 078 184
- PATENT ABSTRACTS OF JAPAN vol. 004, no. 181 (E-037), 13 décembre 1980 & JP 55 124214 A (MITSUBISHI ELECTRIC CORP), 25 septembre 1980

## Description

L'invention concerne une ligne à isolation gazeuse d'un réseau de transport d'énergie électrique, qui comprend un conducteur disposé à l'intérieur d'une enveloppe remplie d'un gaz diélectrique sous pression.

Dans une telle ligne, l'énergie électrique est transportée par le conducteur tandis que l'enveloppe est portée à un potentiel nul. La nature et la pression du gaz diélectrique sont choisies en fonction de la tension qui existe entre le conducteur et l'enveloppe pour garantir l'isolation électrique. A titre d'exemple, une enveloppe d'environ un mètre (m) de diamètre et remplie d'un mélange de 2 pour-cent (%) à 5% d'hexafluorure de soufre (SF₆) dans de l'azote (N₂) sous une pression de 12 bars permet d'isoler un conducteur en aluminium transportant une puissance de l'ordre de 1000 à 2000 mégawatts (MW) sous une tension de l'ordre de 400 000 volts (V). On comprend ainsi que le potentiel nul de l'enveloppe et son faible encombrement font que la ligne à isolation gazeuse est utilisée au ras du sol ou même enterrée. De cette façon, le développement ou la rénovation de réseaux de transport d'énergie électrique par des lignes à isolation gazeuse permet de mieux prendre en compte la protection de l'environnement.

Il est bien connu que des charges tels des transformateurs à vide, alimentés par un réseau de distribution lui même relié au réseau de transport, appellent de l'énergie réactive. Dans les réseaux de transport d'énergie par lignes aériennes, comme décrit par exemple dans le document DE-U-9 016 540, un condensateur de puissance est raccordé électriquement au conducteur de la ligne pour compenser l'énergie réactive consommée par les charges, et permettre ainsi de réduire le transit dans le réseau de l'énergie réactive au bénéfice du transit de l'énergie active. Les condensateurs de puissance apportent une meilleure utilisation de la capacité de transport du réseau, et limitent l'apparition d'instabilités de tension électrique lorsque le réseau est utilisé à la limite de sa capacité.

Les lignes électriques aériennes ont elles-mêmes un comportement capacitif qui est faible, si bien que leur contribution à la fourniture d'énergie réactive capacitive dans le réseau de transport reste limitée devant la contribution des condensateurs de puissance.

Contrairement aux lignes aériennes, les lignes à isolation gazeuse présentent l'avantage d'apporter directement de l'énergie réactive capacitive au réseaux de transport d'énergie. Elles présentent en effet un comportement capacitif environ quatre fois plus important que celui d'une ligne aérienne. A titre d'exemple, une ligne aérienne de 2000 MW transportant une tension électrique de 400 000 volts (V) possède une capacité linéique de l'ordre de 13 000 picofarad par kilomètre (pF/km), alors que pour une ligne à isolation gazeuse, dans les mêmes conditions de puissance et de tension électrique, la capacité linéique est de 50 000 pF/km. Cependant, dans le cas, fréquent en pratique, où l'énergie réactive fournie par la ligne à isolation gazeuse ne suffit pas à elle seule à compenser l'appel d'énergie réactive inductive sur le réseau de transport, il est nécessaire de la raccorder à un condensateur de puissance.

Les lignes aériennes utilisent des condensateurs de puissance qui se présentent en général sous la forme de batteries qui sont composées de condensateurs unitaires couplés en série et en parallèle, et qui sont reliées au réseau de transport par l'intermédiaire d'un disjoncteur. Un châssis supporte les batteries à une distance du sol telle que tout risque de court-circuit dans l'air atmosphérique entre une batterie et le sol soit écarté, notamment dans le cas où le réseau transporte une tension de l'ordre de 400 000 V. L'impossibilité de disposer les batteries au ras du sol, et a fortiori de les enterrer, pose un problème de raccordement d'un condensateur de puissance à une ligne à isolation gazeuse.

Le but de l'invention est une ligne à isolation gazeuse qui est raccordée à un condensateur de puissance de telle manière que son encombrement et son utilisation au ras du sol ou enterrée ne soit pas affectés.

A cet effet, l'invention a pour objet une ligne à isolation gazeuse d'un réseau de transport d'énergie électrique selon la revendication 1.

Le gaz diélectrique présent dans le compartiment assure une isolation électrique de ce dernier par rapport au condensateur de puissance. De cette façon, l'isolation électrique de la ligne à isolation gazeuse entre le conducteur et l'enveloppe est maintenue dans le compartiment où sont raccordés électriquement le condensateur de puissance et le conducteur. D'où il résulte que la ligne à isolation gazeuse selon l'invention conserve un faible encombrement et une utilisation au ras du sol ou enterrée.

D'autres caractéristiques et avantages de l'invention apparaîtront à la lecture de la description de modes de réalisation de l'invention illustrés par les dessins.

La figure 1 montre schématiquement une ligne à isolation gazeuse selon l'invention dans laquelle le conducteur est raccordé en série avec le condensateur de puissance.

La figure 2 montre schématiquement une ligne à isolation gazeuse selon l'invention dans laquelle le conducteur est raccordé en parallèle avec le condensateur de puissance.

La figure 3 montre schématiquement en vue éclatée une ligne à isolation gazeuse selon l'invention triphasée .

La figure 4 montre schématiquement en coupe un condensateur de puissance selon l'invention.

A noter que dans la description, un même élément porte la même référence sur les différentes figures où il est représenté.

L'invention concerne une ligne à isolation gazeuse d'un réseau de transport d'énergie électrique, qui comprend un conducteur disposé à l'intérieur d'une enveloppe remplie d'un gaz diélectrique sous pression. Une telle ligne est réalisée par exemple au moyen d'un tube en aluminium ou en acier formant une enveloppe à l'intérieur de laquelle est disposé une barre en aluminium jouant le rôle d'un conducteur. A noter que trois barres de ce type sont disposées dans le tube lorsque la ligne est triphasée. Le diamètre du tube est par exemple égal à 700 millimètres (mm) et son épaisseur est égale à 8 mm. Comme indiqué précédemment, le gaz diélectrique présent à l'intérieur du tube est par exemple un mélange de SF₆ - entre 2% et 5% - et de N₂ sous une pression de 12 bars. Il faut relever que le SF₆, dont la libération dans l'atmosphère provoque une augmentation de l'effet de serre, est utilisé en faible pourcentage dans la ligne à isolation gazeuse pour une protection accrue de l'environnement. Le réseau de transport d'énergie auquel appartient la ligne à isolation gazeuse est par exemple un réseau dit haute tension, c'est à dire un réseau qui transporte une tension typiquement comprise entre 200 000 V et 400 000 V.

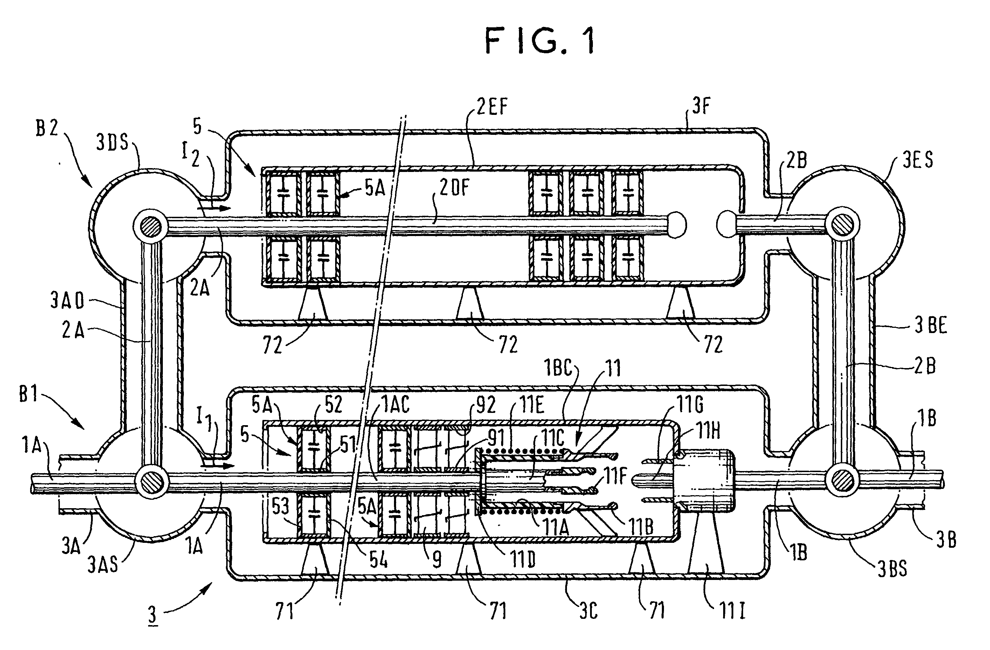

Selon un premier mode de réalisation de l'invention, un condensateur de puissance est disposé à l'intérieur d'un compartiment rempli d'un gaz diélectrique sous pression et solidaire de l'enveloppe de deux portions de ligne de la ligne à isolation gazeuse, en étant raccordé électriquement au conducteur selon un montage du type série. Sur la figure 1, où ce mode de réalisation est illustré, on voit à gauche une première portion d'une ligne à isolation gazeuse du type de celle qui a été décrite précédemment, et qui comprend un conducteur 1A disposé à l'intérieur d'une enveloppe 3A. De même, à droite sur la figure, on voit une deuxième portion de la ligne à isolation gazeuse, comprenant un conducteur 1B disposé dans une enveloppe 3B. Les premier et deuxième conducteurs 1A et 1B se prolongent respectivement par une tige conductrice 1AC et par un tube métallique 1BC qui sont contenus dans un compartiment intermédiaire 3C qui est de forme cylindrique et qui est solidaire des première et deuxième enveloppes 3A et 3B par le biais de deux sphères de dérivation 3AS et 3BS. Le tube métallique 1BC est supporté dans le compartiment intermédiaire 3C par trois supports isolants identiques 71 de telle sorte qu'il est coaxial avec la tige conductrice 1AC qui prolonge le premier conducteur 1A. Le compartiment intermédiaire 3C ainsi que les sphères de dérivation 3AS et 3BS sont remplis d'un même gaz diélectrique tel que celui qui a été décrit précédemment. Ils sont reliés mécaniquement entre eux d'une façon classique, chacun pouvant être déposé indépendamment des autres, et constituent une branche B1 du montage série. Il est prévu de disposer entre la première enveloppe 3A et la sphère de dérivation 3AS, et entre la sphère 3BS et la deuxième enveloppe 3B, un sectionneur classique et non représenté, les deux sectionneurs assurant une déconnexion électrique en cas de nécessité.

Figure 1, on voit que le condensateur de puissance 5 est formé par une batterie de condensateurs unitaires identiques 5A qui ont une section annulaire pour être montés par coulissement à la fois autour de la tige conductrice 1AC qui prolonge le premier conducteur 1A et à l'intérieur du tube métallique 1BC qui prolonge le deuxième conducteur 1B. Chaque condensateur unitaire 5A est muni d'une électrode circulaire intérieure 51 qui assure un contact électrique glissant avec la tige conductrice 1AC, et d'une électrode circulaire extérieure 52 qui assure un contact électrique glissant avec le tube métallique 1BC. Les électrodes intérieure et extérieure de chaque condensateur unitaire 5A sont fixés à deux flasques latéraux isolants 53 et 54 qui ferment de façon étanche le volume intérieur du condensateur. Les condensateurs unitaires identiques 5A sont empilés par coulissement entre la tige conductrice 1AC et le tube métallique 1BC pour former une batterie de tels condensateurs associés en parallèle. De cette façon, la capacité électrique totale de la batterie est proportionnelle au nombre de condensateurs unitaires 5A associés, qu'il est avantageux de choisir en fonction de la quantité d'énergie réactive capacitive à compenser dans le réseau de. transport auquel appartient la ligne à isolation gazeuse. Un moyen classique non représenté est prévu pour bloquer les condensateurs unitaires empilés entre la tige conductrice et le tube métallique.

Dans l'exemple de la figure 1, le condensateur de puissance 5 assure une conduction électrique entre la tige conductrice 1AC et le tube métallique 1BC. Dans la mesure où ce condensateur de puissance est traversé par tout le courant électrique transporté par la branche B1 de la ligne à isolation gazeuse, le raccordement électrique entre le conducteur et ce condensateur est du type série.

Il est prévu, figure 1, de raccorder les premier et deuxième conducteurs 1A et 1B respectivement à un premier et un deuxième tronçons conducteurs 2A et 2B pour former une branche B2 en dérivation par rapport à la branche B1. On voit sur la figure 1 que le premier tronçon 2A monté en dérivation sur le premier conducteur 1A chemine à l'intérieur de la sphère de dérivation 3AS, d'un compartiment de liaison 3AD, d'une sphère de dérivation 3DS et d'un deuxième compartiment intermédiaire 3F où il se prolonge par une tige conductrice 2DF. De même, le deuxième tronçon 2B monté en dérivation sur le deuxième conducteur 1B chemine à l'intérieur de la sphère de dérivation 3BS, d'un compartiment de liaison 3BE, d'une sphère de dérivation 3ES et du deuxième compartiment intermédiaire 3F où il se prolonge par un tube métallique 2EF. Le tube métallique 2EF est supporté dans le compartiment intermédiaire 3F par trois supports isolants identiques 72 de telle sorte qu'il est coaxial avec la tige conductrice 2DF qui prolonge le premier tronçon 2A. Les compartiments de liaison, les sphères de dérivation et le compartiment intermédiaire de la deuxième branche B2 sont remplis du même gaz diélectrique que les éléments qui forment la première branche B1 pour assurer une isolation électrique.

La conduction électrique entre les premier et deuxième tronçons de dérivation 2A et 2B est assurée par un deuxième condensateur de puissance 5 disposé dans le compartiment intermédiaire 3F entre la tige conductrice 2DF et le tube métallique 2EF. Dans la mesure où ce condensateur de puissance est traversé par tout le courant électrique transporté par la branche B2 de la ligne à isolation gazeuse, le raccordement électrique entre le conducteur et ce condensateur est du type série.

Le condensateur de puissance 5 de la deuxième branche B2 est constitué de condensateurs unitaires 5A, qui sont identiques à ceux constituant le condensateur de puissance de la première branche B1. Les condensateurs unitaires identiques 5A sont empilés par coulissement entre la tige conductrice 2DF et le tube métallique 2EF pour former une batterie de tels condensateurs associés en parallèle. Le condensateur de puissance 5 de la deuxième branche B2 est monté en dérivation par rapport au condensateur de puissance 5 de la première branche B1 pour augmenter la capacité totale des deux batteries à fournir de l'énergie réactive capacitive au réseau de transport dans lequel est inséré la ligne à isolation gazeuse. L'utilisation de la deuxième branche B2 en parallèle à la première branche B1 permet de réduire la longueur de chacune des deux branches. A titre d'exemple, une branche B1 ou B2 possède une longueur typique de 100 m. Il est encore prévu de disposer une troisième branche, du type de celles décrites précédemment et montée en dérivation par rapport à elles, pour encore augmenter la capacité totale de la ligne à isolation gazeuse en énergie réactive capacitive.

En fonctionnement normal, le courant électrique transporté par la ligne à isolation gazeuse se divise en deux intensités I1 et 12 qui parcourent respectivement les tronçons conducteurs et le condensateur de puissance de chacune des deux branches B1 et B2. La différence de potentiel est identique aux bornes des deux condensateurs de puissance 5 et détermine la tension dite nominale de chaque condensateur. La nature et la pression du gaz diélectrique contenu dans les compartiments intermédiaires, dans les compartiments de liaison et dans les différentes sphères de dérivation est choisie pour tenir la tension nominale.

En cas de court-circuit, une augmentation du courant électrique entraîne une surtension aux bornes des condensateurs de puissance. Il est prévu de disposer des varistances qui écrêtent la surtension et protègent ainsi les condensateurs de puissance. Figure 1, des varistances identiques 9 de forme cylindrique et logées dans des tubes isolants, sont montées autour de la tige conductrice 1AC selon une direction radiale. Une base conductrice inférieure 91 relie électriquement chaque varistance à la tige conductrice 1AC, et une base conductrice supérieure 92, au tube métallique 1BC, de sorte que leur montage est parallèle à celui des condensateurs unitaires 5A du condensateur de puissance 5.

Un interrupteur est disposé entre la tige conductrice 1AC et la tige conductrice 1B dans le compartiment intermédiaire 3C et est monté en parallèle au condensateur de puissance pour le court-circuiter et permettre ainsi à la ligne à isolation gazeuse de fonctionner sans le condensateur. Sur la figure 1, un interrupteur 11 comprend une couronne des doigts de contact 11B portée par un tube isolant 11A solidaire de la tige conductrice 1AC par l'intermédiaire d'une base métallique 11 D. Un conducteur en cuivre est enroulée en bobine autour du tube isolant 11A pour former une inductance 11E montée en série avec l'interrupteur 11 en reliant électriquement la base métallique 11D et les doigts de contact 11B. Un tube métallique 11C est disposé à l'intérieur du tube isolant 11A. Il est fixé par une extrémité à la base métallique 11D, et porte à l'extrémité opposée, une couronne de doigts de contact 11F. Un contact tubulaire 11G et un contact cylindrique 11H sont disposés de façon coaxiale au tube isolant 11A et au tube métallique 11C par l'intermédiaire d'un support isolant 11I, et sont montés mobiles en translation pour coulisser respectivement sur les doigts de contact 11B et sur les doigts de contact 11F. Les doigts de contact 11F sont montés en retrait par rapport aux doigts de contact 11B pour que, lors de la fermeture du disjoncteur, on court-circuite le condensateur de puissance 5 d'abord par l'inductance montée en série, ce qui permet de réduire le courant de décharge des condensateurs unitaires 5A. Puis la connexion des doigts de contact 11F et du contact cylindrique 11H entraîne la mise en court-circuit de l'inductance.

Il est prévu également de pourvoir la deuxième branche B2 d'un éclateur commandé pour assurer une protection complémentaire à celles des varistances.

Le montage du condensateur de puissance en série par rapport à la ligne à isolation gazeuse tel qu'il est illustré par la figure 1 se rapporte à une ligne monophasée. L'invention s'étend cependant à une ligne à isolation gazeuse comportant plusieurs phases. Dans le cas d'un transport d'énergie électrique par courant triphasé, il est prévu de disposer entre les deux portions de la ligne à isolation gazeuse, trois paires de branches identiques aux branches B1 et B2 décrites dans la figure 1, chaque paire étant raccordée en série aux tronçons 1A et 1B de chaque conducteur monophasé de la ligne à isolation gazeuse.

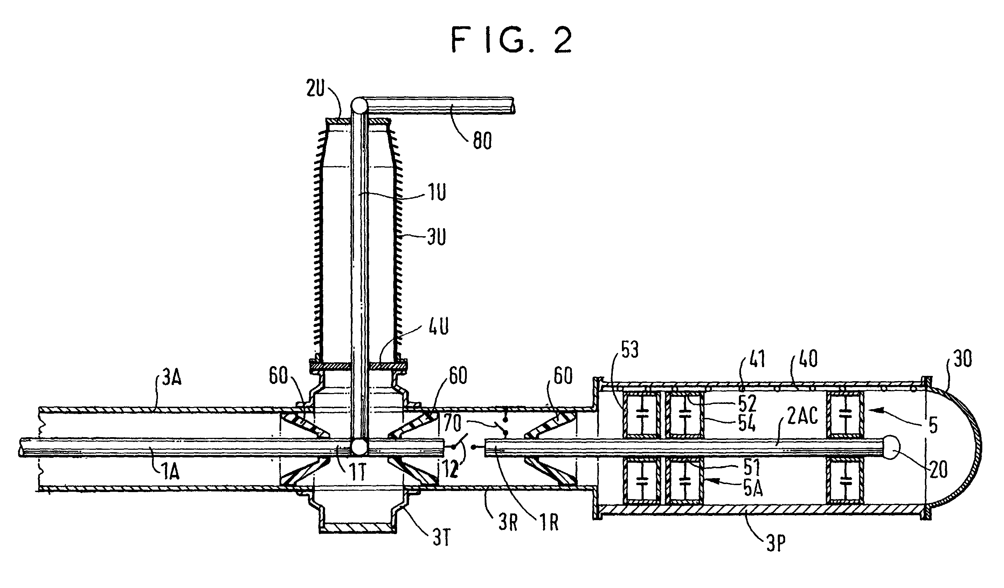

Selon un deuxième mode de réalisation de l'invention, un condensateur de puissance est disposé à l'intérieur d'un compartiment rempli d'un gaz diélectrique sous pression et solidaire de l'enveloppe de la ligne à isolation gazeuse, en étant raccordé électriquement au conducteur selon un montage du type parallèle. Sur la figure 2, où ce mode de réalisation est illustré, on voit à gauche une ligne à isolation gazeuse monophasée du type de celle qui a été décrite précédemment, et qui comprend un conducteur 1A disposé à l'intérieur d'une enveloppe 3A. Un condensateur de puissance 5 est disposé à l'intérieur d'un compartiment 3P cylindrique et métallique qui est solidaire de l'enveloppe 3A par l'intermédiaire, de droite à gauche sur la figure, d'un compartiment intermédiaire 3R et d'une cuve 3T. Le conducteur 1A est relié, par l'intermédiaire de tronçons conducteurs 1T et 1R montés en série et disposés respectivement dans les éléments intermédiaires 3T et 3R, à une tige conductrice 2AC disposée dans le compartiment 3P métallique qui contient le condensateur de puissance 5. L'enveloppe 3A, le compartiment 3P métallique, et les éléments intermédiaires 3T et 3R sont portés à un potentiel constant et nul, et sont remplis d'un gaz diélectrique tel que celui qui a été décrit précédemment, assurant leur isolation électrique par rapport aux différents tronçons conducteurs qu'ils contiennent. Les liaisons mécaniques entre ces éléments sont réalisées d'une façon classique, chacun pouvant être déposé indépendamment des autres.

Figure 2, on voit que le condensateur de puissance 5 est formé par une batterie de condensateurs unitaires identiques 5A qui ont une section annulaire pour être montés par coulissement à la fois autour de la tige conductrice 2AC qui prolonge le conducteur 1A et à l'intérieur du compartiment 3P métallique. Les condensateurs unitaires 5A sont identiques à ceux qui ont été décrits dans le mode de réalisation illustré par la figure 1. En particulier, chaque condensateur unitaire 5A est muni d'une électrode circulaire intérieure 51 qui assure un contact électrique glissant avec la tige 2AC, et d'une électrode circulaire extérieure 52 qui assure un contact électrique glissant avec le compartiment 3P métallique. Les électrodes intérieure et extérieure de chaque condensateur unitaire 5A sont fixés à deux flasques latéraux isolants 53 et 54 qui ferment de façon étanche le volume intérieur du condensateur. Les condensateurs unitaires identiques 5A sont empilés par coulissement entre la tige conductrice 2AC et le compartiment 3P métallique pour former une batterie de tels condensateurs associés en parallèle. De cette façon, la capacité électrique totale de la batterie est proportionnelle au nombre de condensateurs unitaires 5A associés, qu'il est avantageux de choisir en fonction de la quantité d'énergie réactive capacitive à compenser dans le réseau de transport auquel appartient la ligne à isolation gazeuse. L'empilement par coulissement des condensateurs unitaires est effectué en déposant le compartiment métallique 3P pour accéder facilement à la tige 2AC. Il est prévu également d'empiler les condensateurs unitaires 5A sans déposer le compartiment 3P métallique. Un fond 30 étanche est ainsi monté de façon amovible pour accéder à la tige 2AC. Trois barres identiques 40 sont munies de roues 41 et sont montées roulantes contre la paroi interne du compartiment 3P métallique à 120 degrés par l'intermédiaire de trois glissières classiques et non représentées, pour faciliter la mise en place des condensateurs unitaires 5A. Un moyen classique non représenté est prévu pour bloquer les condensateurs unitaires empilés dans le compartiment 3P métallique. La tige conductrice 2AC est terminée par une sphère 20 amovible réduisant les effets de bords électriques avec le fond 30 du compartiment 3P métallique.

Dans l'exemple de la figure 2, le condensateur de puissance 5 assure une conduction électrique entre la tige 2AC, qui est au même potentiel que le conducteur 1A de la ligne à isolation gazeuse, et le compartiment 3P métallique, qui est au même potentiel que l'enveloppe 3A. Dans la mesure où ce condensateur est soumis à toute la haute tension qui est transportée par la ligne, le montage de la figure 2 est du type parallèle.

Le compartiment 3R intermédiaire entre le compartiment 3P métallique et la cuve 3T est fermé par deux cônes isolants identiques 60 fixés d'une part au compartiment intermédiaire 3R et d'autre part au tronçon conducteur 1R pour assurer une étanchéité au gaz diélectrique présent à l'intérieur. Un disjoncteur 12 classique et simplement symbolisé sur la figure 2 par un symbole électrique, est disposé à l'intérieur du compartiment intermédiaire 3R et est monté en série, avec le tronçon conducteur 1T disposé dans la cuve 3T, et avec le condensateur de puissance 5 par l'intermédiaire du tronçon conducteur 1R pour permettre, par l'ouverture du disjoncteur, la mise hors tension du condensateur de puissance 5, et ainsi faire fonctionner la ligne à isolation gazeuse sans le condensateur. II est également prévu de disposer dans le compartiment intermédiaire 3R une mise à la terre 70 montée en parallèle avec le condensateur de puissance. Après une ouverture du disjoncteur 12, les condensateurs unitaires 5A se déchargent vers le potentiel nul du compartiment 3R par l'intermédiaire de la mise à la terre 70. A noter que, par rapport à la ligne à isolation décrite précédemment, le compartiment 3R intermédiaire est de préférence rempli de SF₆ pur sous une pression de 5 bars environ.

La cuve 3T est fermée vis-à-vis du compartiment 3R intermédiaire d'une part, et de l'enveloppe 3A d'autre part, par des cônes isolants 60 identiques à ceux du compartiment 3R intermédiaire. Dans l'exemple de la figure 2, une traversée isolante 3U en porcelaine, est montée sur un côté de la cuve 3T pour isoler un tronçon conducteur 1U qui est monté en série, avec l'interrupteur 11 par l'intermédiaire du tronçon conducteur 1T contenu dans la cuve 3T, et avec une ligne aérienne 80 par une extrémité de la traversée isolante 1U. Une base supérieure 2U et une base inférieure annulaire 4U ferment la traversée isolante 1U de façon étanche au gaz diélectrique qui est présent à l'intérieur. De préférence, la cuve 3T et la traversée isolante 1U sont remplies du même gaz diélectrique que le compartiment 3R intermédiaire, et sous une même pression. Figure 2, on comprend que le tronçon conducteur 1U disposé à l'intérieur de la traversée 3U forme un noeud de réseau entre la ligne aérienne et la ligne à isolation gazeuse, et est monté en série avec le condensateur de puissance. En pratique, la cuve 3T est montée sur un support au sol ainsi que le compartiment intermédiaire 3R et le compartiment 3P métallique. La portion de la ligne à isolation gazeuse qui est reliée au noeud du réseau est également posée au sol. La ligne à isolation gazeuse se prolonge soit en restant disposée sur le sol, soit en étant enterrée. A noter qu'il est prévu de monter le condensateur de puissance 5 parallèlement à la ligne à isolation gazeuse, ou perpendiculairement à celle-ci, ou encore dans une direction intermédiaire pour prendre en compte une configuration particulière du sol.

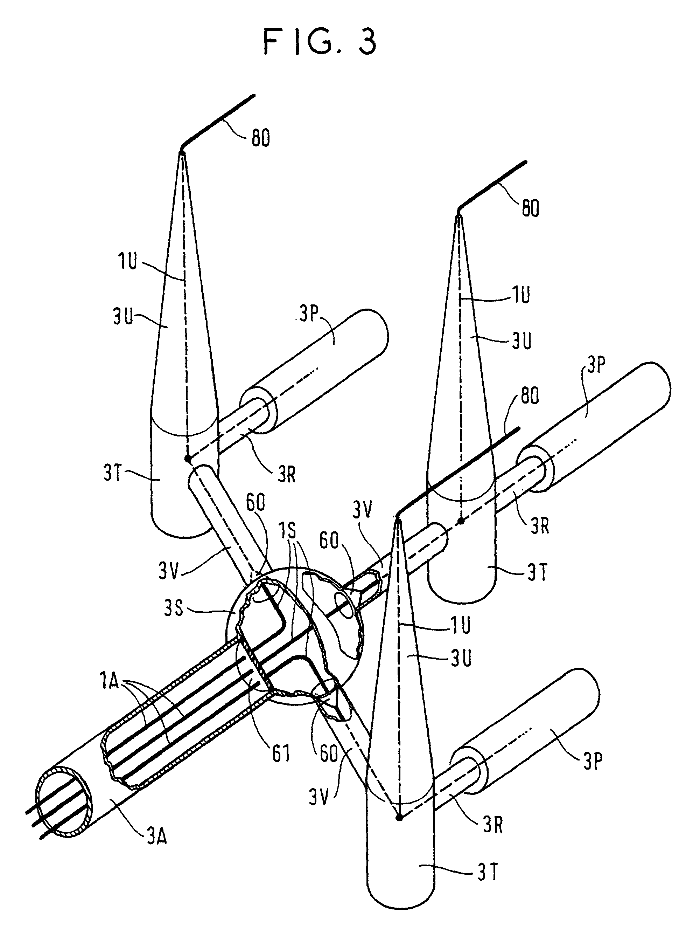

Le montage du condensateur de puissance en parallèle par rapport à la ligne à isolation gazeuse tel qu'il est illustré par la figure 2 se rapporte à une ligne monophasée. Dans le cas d'un transport d'énergie électrique par courant triphasé, trois conducteurs identiques 1A, figure 3, sont disposés dans l'enveloppe 3A de la ligne à isolation gazeuse. Ils sont raccordés à trois tronçons conducteurs identiques 1S disposés dans la sphère de dérivation 3S, qui assure une dérivation de chacun des trois tronçons conducteurs vers un condensateur de puissance contenu dans un compartiment 3P métallique solidaire d'un compartiment intermédiaire 3R et d'une cuve 3T, dans un agencement tel que celui qui a été décrit dans la figure 2 pour une ligne à isolation gazeuse monophasée. L'exemple de la figure 3 illustre le cas où les trois condensateurs de puissance sont montés en parallèle par rapport à un noeud de réseau entre la ligne à isolation gazeuse triphasée et trois phases d'une ligne aérienne classique 80. Chaque cuve 3T supporte une traversée 3U à l'intérieur de laquelle se trouve un tronçon conducteur 1U raccordé individuellement aux trois tronçons 1S présents dans la sphère de dérivation 3S par l'intermédiaire de compartiment de liaison 3V. La sphère de dérivation 3S est fermée vis-à-vis de l'enveloppe 3A par une paroi étanche 61, et vis-à-vis des trois compartiments de liaison 3V, par trois cônes isolants 60 du type de ceux décrits dans la figure 2 de telle sorte que la sphère de dérivation et ces compartiments sont étanches au gaz diélectrique sous pression qu'ils contiennent, et qui est par exemple, du SF₆ à une pression d'environ 5 bars.

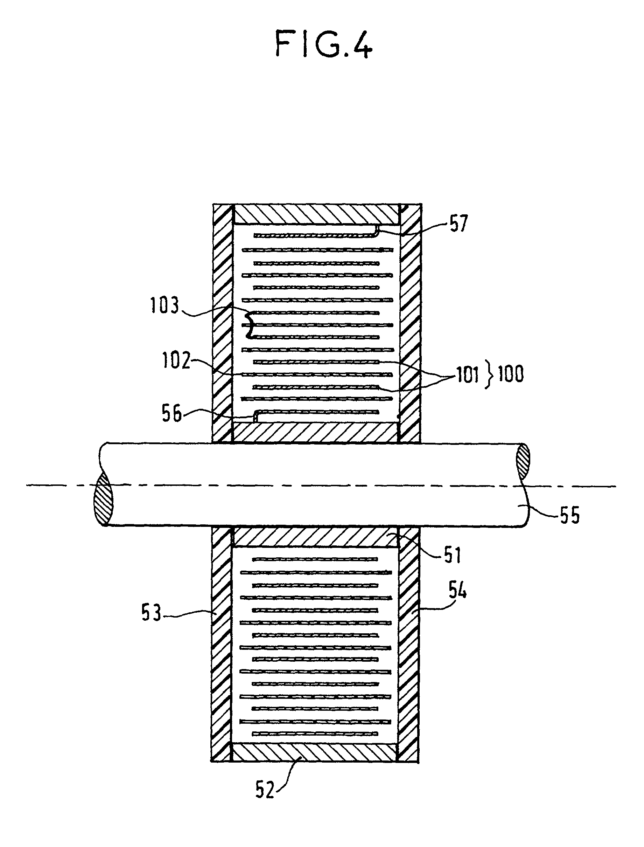

Sur la figure 4, on a représenté en coupe radiale un condensateur unitaire 5A de forme annulaire qui est empilé autour d'une tige conductrice 55 du type de celles 1AC, 2DF ou 2AC décrites dans les figures 1 et 2. Un élément de condensateur 100 comprend deux bandes métalliques identiques 101 séparées par un film isolant 102. De préférence, le film isolant 102 possède une largeur supérieure à celle des bandes métalliques 101 assurant une isolation en ligne de fuite plus importante. A noter qu'un élément de condensateur 100 possède typiquement une longueur de plusieurs mètres. Un premier élément de condensateur 100 est enroulé autour de l'électrode circulaire intérieure 51 pour assurer un contact électrique 56. Un deuxième élément de condensateur identique 100 est enroulé autour de l'électrode 51 par dessus le premier élément 100, et ainsi de suite jusqu'à ce qu'un dernier élément de condensateur 100 soit en contact électrique 57 avec l'électrode circulaire extérieure 52. Les éléments de condensateurs enroulés sont reliés entre eux successivement par des clinquants 103 pour former une association en série de condensateurs capable de tenir une tension aussi élevée que celle qui est transportée par la ligne à isolation gazeuse. Le volume intérieur d'un condensateur 5A fermé de façon étanche par les deux flasques isolants 53 et 54 est rempli d'un gaz diélectrique sous pression, comme du SF₆ pour augmenter la rigidité diélectrique du condensateur. Il est également prévu de remplir le volume intérieur du condensateur 5A avec de l'huile, comme de l'huile de ricin.

## Revendications

1. Ligne à isolation gazeuse pour réseau de transport d'énergie électrique, qui comprend un conducteur (1A;1B) disposé à l'intérieur d'une enveloppe (3A,3B) remplie d'un gaz diélectrique sous pression, **caractérisée par le fait qu'**un condensateur de puissance (5) adapté à la fourniture d'énergie réactive au réseau est disposé à l'intérieur d'un compartiment (3C, 3P) de forme cylindrique solidaire de l'enveloppe (3A,3B), rempli d'un gaz diélectrique sous pression et contenant une tige conductrice (1AC; 2AC) coaxiale reliée par l'intermédiaire d'un interrupteur (11,12) au conducteur (1A,1B), ce condensateur de puissance (5) comprenant au moins un condensateur unitaire (5A) qui est de section annulaire et qui est monté autour de ladite tige conductrice (1AC, 2AC) en contact électrique avec ladite tige conductrice par l'intermédiaire d'une électrode intérieure (51) et avec un tube métallique (1 BC, 3P) coaxial à ladite tige conductrice par l'intermédiaire d'une électrode extérieure (52), le dit tube étant connecté de façon à permettre la fourniture d'énergie réactive par le condensateur de puissance (5).

2. La ligne à isolation gazeuse selon la revendication 1, dans laquelle les électrodes intérieure (51) et extérieure (52) forment un contact glissant avec ladite tige conductrice (1AC, 2AC) et ledit tube métallique (1BC, 3P), respectivement.

3. La ligne à isolation gazeuse selon la revendication 1 ou 2, dans laquelle le condensateur de puissance est monté en parallèle avec le conducteur (1A), ledit tube métallique (3P) constituant ledit compartiment.

4. La ligne à isolation gazeuse selon la revendication 1 ou 2, dans laquelle le condensateur de puissance est monté en série avec le conducteur (1A), ledit tube métallique (1BC) étant disposé dans ledit compartiment (3C).

5. La ligne à isolation gazeuse selon la revendication 3, dans laquelle le compartiment (3P) est solidaire de l'enveloppe (3A) par l'intermédiaire d'un deuxième compartiment (3R) qui est rempli d'un gaz diélectrique sous pression et qui contient un disjoncteur (12) monté en série avec le condensateur de puissance (5).

6. La ligne à isolation gazeuse selon la revendication 5, dans laquelle une mise à la terre (70) est solidaire du deuxième compartiment (3R) et est montée en parallèle avec le condensateur de puissance (5).

7. La ligne à isolation gazeuse selon la revendication 5 ou 6, dans laquelle le deuxième compartiment (3R) est solidaire de l'enveloppe (3A) par l'intermédiaire d'une cuve (3T) qui est remplie d'un gaz diélectrique sous pression et qui contient un tronçon conducteur (1T) monté en série avec l'interrupteur (11).

8. La ligne à isolation gazeuse selon la revendication 7, dans laquelle la cuve (3T) est surmontée d'une traversée isolante (3U) qui est remplie d'un gaz diélectrique sous pression et qui contient un tronçon conducteur (1U) monté en série avec l'interrupteur (11) et avec une ligne aérienne (80) soutenue par la traversée isolante (3U).

9. La ligne à isolation gazeuse selon l'une des revendications 1 à 8, dans laquelle le condensateur de puissance (5) est monté parallèlement ou perpendiculairement par rapport à la ligne à isolation gazeuse, ou dans une direction intermédiaire entre parallèle ou perpendiculaire.

10. La ligne à isolation gazeuse selon la revendication 3, dans laquelle une tige conductrice (1AC) est reliée au conducteur (1A) d'une première portion de la ligne à isolation gazeuse, et un tube métallique (1BC) est relié au conducteur (1B) d'une deuxième portion de ligne, la tige conductrice (1AC) et le tube métallique (1BC) étant disposés dans le compartiment (3C) qui est de forme cylindrique et qui est solidaire de l'enveloppe (3A, 3B) de deux portions de ligne.

11. La ligne à isolation gazeuse selon la revendication 10, dans laquelle une varistance (9) est disposée entre la tige conductrice (1AC) et le tube métallique (1BC) et est montée en parallèle au condensateur de puissance (5).

12. La ligne à isolation gazeuse selon la revendication 10 ou 11, dans laquelle un interrupteur (11) est disposé entre la tige conductrice (1AC) et le conducteur (1B) et est monté en parallèle avec le condensateur de puissance (5).

13. La ligne à isolation gazeuse selon la revendication 12, dans laquelle l'interrupteur (11) comprend une inductance (11E) montée en série, et deux contacts (11G,11H) mobiles par rapport à deux couronnes de doigts de contacts (11F,11B) qui sont fixes par rapport à l'interrupteur (11) et dont l'une (11F) est montée en retrait par rapport à l'autre (11B).

14. La ligne à isolation gazeuse selon l'une des revendications 10 à 13, dans laquelle un deuxième condensateur de puissance (5) est disposé dans un deuxième compartiment (3F) rempli d'un gaz diélectrique sous pression et solidaire du premier compartiment (3C) dans lequel est disposé le premier condensateur de puissance (5), les deux condensateurs de puissance étant montés en dérivation l'un par rapport à l'autre.

15. La ligne à isolation gazeuse selon la revendication 1, dans laquelle le condensateur de puissance (5) comprend plusieurs condensateurs unitaires (5A) identiques empilés autour de la tige conductrice (1AC,2AC) pour former une batterie de tels condensateurs unitaires associés en parallèle.

16. La ligne à isolation gazeuse selon l'une des revendications 1 ou 15, dans laquelle chaque condensateur unitaire (5A) comprend des éléments de condensateurs (100) qui sont enroulés autour de l'électrode intérieure (51) jusqu'à l'électrode extérieure (52) et qui sont reliés successivement entre eux en série par des clinquants (103).

17. La ligne à isolation gazeuse selon la revendication 16, dans laquelle les électrodes intérieure (51) et extérieure (52) sont maintenues par deux flasques latéraux et isolants (53, 54) montés étanches.

18. La ligne à isolation gazeuse selon la revendication 17, dans laquelle chaque condensateur unitaire (5A) est rempli d'un gaz diélectrique sous pression.

19. La ligne à isolation gazeuse selon la revendication 17, dans laquelle chaque condensateur unitaire (5A) est rempli d'une huile.

20. Application de la ligne à isolation gazeuse selon l'une quelconque des revendications précédentes au transport d'énergie électrique monophasée ou triphasée.

## Claims

1. A gas-insulated line for an electrical power transport grid, the line comprising a conductor (1A, 1B) disposed inside a case (3A, 3B) filled with a dielectric gas under pressure, the line being **characterized by** the fact that a power capacitor (5) designed to supply reactive power to the grid is disposed inside a compartment (3C, 3P) of cylindrical shape secured to the case (3A, 3B), filled with a dielectric gas under pressure, and containing a coaxial conductive rod (1AC, 2AC) connected by means of a switch (11, 12) to the conductor (1A, 1B), the power capacitor (5) comprising at least one unit capacitor (5A) of annular section mounted around said conductive rod (1AC, 2AC), in electrical contact with said conductive rod via an inner electrode (51), and in electrical contact with a metal tube (1BC, 3P) coaxial with said conductive rod via an outer electrode (52), said tube being connected so as to enable reactive power to be supplied by the power capacitor (5).

2. A gas-insulated line according to claim 1, in which the inner and outer electrodes (51 and 52) make sliding contact with said conductive rod (1AC, 2AC) and with said metal tube (1 BC, 3P), respectively.

3. A gas-insulated line according to claim 1 or 2, in which the power capacitor is connected in parallel with the conductor (1A), said metal tube (3P) constituting said compartment.

4. A gas-insulated line according to claim 1 or 2, in which the power capacitor is connected in series with the conductor (1A), said metal tube (1BC) being disposed inside said compartment (3C).

5. A gas-insulated line according to claim 3, in which the compartment (3P) is secured to the case (3A) via a second compartment (3R) which is filled with a dielectric gas under pressure and which contains a circuit breaker (12) connected in series with the power capacitor (5).

6. A gas-insulated line according to claim 5, in which a grounding connection (70) is secured to the second compartment (3R) and is connected in parallel with the power capacitor (5).

7. A gas-insulated line according to claim 5 or 6, in which the second compartment (3R) is secured to the case (3A) by means of a vessel (3T) which is filled with a dielectric gas under pressure, and which contains a conductive segment (1T) connected in series with the switch (11).

8. A gas-insulated line according to claim 7, in which said vessel (3T) is surmounted by an insulating bushing (3U) filled with dielectric gas under pressure and containing a conductive segment (1U) connected in series with the switch (11) and with an overhead line (80) supported by the insulating bushing (3U).

9. A gas-insulated line according to any one of claims 1 to 8, in which the power capacitor (5) is mounted physically in parallel with or perpendicular to the gas-insulated line, or in a direction that is intermediate between parallel and perpendicular.

10. A gas-insulated line according to claim 3, in which a conductive rod (1AC) is connected to the conductor (1A) of a first portion of the gas-insulated line, and a metal tube (1BC) is connected to the conductor (1B) of a second portion of line, the conductive rod (1AC) and the metal tube (1BC) being disposed in the compartment (3C) which is cylindrical in shape and which is secured to the cases (3A, 3B) of the two line portions.

11. A gas-insulated line according to claim 10, in which a varistor (9) is disposed between the conductor rod (1AC) and the metal tube (1BC) and is connected in parallel with the power capacitor (5).

12. A gas-insulated line according to claim 10 or 11, in which a switch (11) is disposed between the conductive rod (1AC) and the conductor (1B) and is connected in parallel with the power capacitor (5).

13. A gas-insulated line according to claim 12, in which the switch (11) comprises a series-connected inductor (11E) and two contacts (11G, 11H) movable relative to two rings of contact fingers (11F, 11B) which are fixed relative to the switch (11), with one of the rings (11F) being set back relative to the other (11B).

14. A gas-insulated line according to any one of claims 10 to 13, in which a second power capacitor (5) is disposed in a second compartment (3F) filled with a dielectric gas under pressure and secured to the first compartment (3C) in which the first power capacitor (5) is disposed, the two power capacitors being connected in parallel relative to each other.

15. A gas-insulated line according to claim 1, in which the power capacitor (5) comprises a plurality of identical unit capacitors (5A) stacked around the conductive rod (1AC, 2AC) to form a battery of such unit capacitors associated in parallel.

16. A gas-insulated line according to claim 1 or 15, in which each unit capacitor (5A) comprises capacitor elements (100) which are wound around the inner electrode (51) to the outer electrode (52) and which are successively interconnected in series with one another by pieces of metal foil (103).

17. A gas-insulated line according to claim 16, in which the inner and outer electrodes (51, 52) are held by two insulating cheek plates (53, 54) that are mounted in leakproof manner.

18. A gas-insulated line according to claim 17, in which each unit capacitor (5A) is filled with a dielectric gas under pressure.

19. A gas-insulated line according to claim 17, in which each unit capacitor (5A) is filled with oil.

20. The use of the gas-insulated line according to any preceding claim to single-phase or three-phase transport of electrical power.

## Patentansprüche

1. Gasisolierte Leitung für ein Netz zum Transport von elektrischer Energie, mit einem Leiter (1A; 1B), der im Innern einer Hülle (3A, 3B) angeordnet ist, die mit einem druckbeaufschlagten Gas gefüllt ist, **dadurch gekennzeichnet, dass** ein Leistungskondensator (5), der zum Liefern von Blindenergie in das Netz eingerichtet ist, in einer mit der Hülle (3A, 3B) fest verbundenen Kammer (3C, 3P) von zylindrischer Form angeordnet ist, die mit einem druckbeaufschlagten dielektrischen Gas gefüllt ist und eine leitfähige Stange (1AC, 2AC), die zum Leiter (1A; 1B) koaxial und mit diesem über einen Schalter (11, 12) verbunden ist, enthält, wobei dieser Leistungskondensator wenigstens einen einheitlichen Kondensator (5A) von ringförmigem Querschnitt umfasst, der um die leitfähige Stange (1AC, 2AC) herum montiert und mit der leitfähigen Stange über eine innere Elektrode (51) und mit einem zu der leitfähigen Stange koaxialen metallischen Rohr (1BC, 3P) über einer äußeren Elektrode (52) in elektrischem Kontakt ist, wobei das Rohr angeschlossen ist, um die Einspeisung von Blindenergie von dem Leistungskondensator (5) zu ermöglichen.

2. Gasisolierte Leitung nach Anspruch 1, bei der die innere (51) und äußere Elektrode (52) einen gleitenden Kontakt mit der leitfähigen Stange (1AC, 2AC) bzw. dem metallischen Rohr (1BC, 3P) bilden.

3. Gasisolierte Leitung nach Anspruch 1 oder 2, bei der der Leistungskondensator parallel mit dem Leiter (1A) montiert ist, wobei das metallische Rohr (3P) die Kammer bildet.

4. Gasisolierte Leitung nach Anspruch 1 oder 2, bei der der Leistungskondensator in Reihe mit dem Leiter (1A) montiert ist und das metallische Rohr (1BC) in der Kammer (3C) angeordnet ist.

5. Gasisolierte Leitung nach Anspruch 3, bei der die Kammer (3P) mit der Hülle (3A) über eine zweite Kammer (3R) verbunden ist, die mit einem druckbeaufschlagten dielektrischen Gas gefüllt ist und einen in Reihe mit dem Leistungskondensator (5) montierten Schutzschalter (12) enthält.

6. Gasisolierte Leitung nach Anspruch 5, bei der eine Erdung (70) mit der zweiten Kammer (3R) verbunden und parallel zum Leistungskondensator (5) montiert ist.

7. Gasisolierte Leitung nach Anspruch 5 oder 6, bei der die zweite Kammer (3R) mit der Hülle (3A) über einen Behälter (3T) verbunden ist, der mit einem druckbeaufschlagten dielektrischen Gas gefüllt ist und einen in Reihe mit dem Schalter (11) montierten Leiterabschnitt (1T) enthält.

8. Gasisolierte Leitung nach Anspruch 7, bei der sich über dem Behälter (3T) eine isolierende Traverse (3U) befindet, die mit einem druckbeaufschlagten dielektrischen Gas gefüllt ist und einen in Reihe mit dem Schalter (11) und einer von der isolierenden Traverse (3U) unterstützten Luftleitung (80) montierten Leiterabschnitt (1U) enthält.

9. Gasisolierte Leitung nach einem der Ansprüche 1 bis 8, bei der der Leistungskondensator (5) parallel oder senkrecht in Bezug auf die gasisolierte Leitung oder in einer Zwischenrichtung zwischen Parallel und Senkrecht montiert ist.

10. Gasisolierte Leitung nach Anspruch 3, bei der eine leitfähige Stange (11AC) mit dem Leiter (1A) eines ersten Abschnitts der gasisolierten Leitung verbunden ist und ein metallisches Rohr (1BC) mit dem Leiter (1B) eines zweiten Abschnitts der Leitung verbunden ist, wobei die leitfähige Stange (1AC) und das metallische Rohr (1BC) in der Kammer (3C) von zylindrischer Form angeordnet sind, die mit der Hülle (3A, 3B) der zwei Leitungsabschnitte verbunden ist.

11. Gasisolierte Leitung nach Anspruch 10, bei der ein Varistor (9) zwischen der leitfähigen Stange (1AC) und dem metallischen Rohr (1BC) angeordnet und parallel zum Leistungskondensator (5) montiert ist.

12. Gasisolierte Leitung nach Anspruch 10 oder 11, bei der ein Schalter (11) zwischen der leitfähigen Stange (1AC) und dem Leiter (1B) angeordnet und parallel zum Leistungskondensator (5) montiert ist.

13. Gasisolierte Leitung nach Anspruch 12, bei der der Schalter (11) eine in Reihe geschaltete Induktivität und zwei Kontakte (11G, 11H) umfasst, die in Bezug auf zwei Kontaktfingerkränze (11F, 11B) beweglich sind, die in Bezug auf den Schalter (11) fest sind und von denen der eine (11F) in Bezug auf den anderen (11B) zurückspringend montiert ist.

14. Gasisolierte Leitung nach einem der Ansprüche 10 bis 13, bei der ein zweiter Leistungskondensator (5) in einer zweiten mit einem druckbeaufschlagten dielektrischen Gas gefüllten Kammer (3F) montiert ist, die mit der ersten Kammer (3C) verbunden ist, in der der erste Leistungskondensator (5) angeordnet ist, und die zwei Leistungskondensatoren im Nebenschluss zueinander montiert sind.

15. Gasisolierte Leitung nach Anspruch 1, bei der der Leistungskondensator (5) mehrere identische einheitliche Kondensatoren (5A) umfasst, die um die leitfähige Stange (1AC, 2AC) zu einer Batterie von solchen parallel assoziierten einheitlichen Kondensatoren gestapelt sind.

16. Gasisolierte Leitung nach einem der Ansprüche 1 oder 15, bei der jeder einheitliche Kondensator (5A) Kondensatorelemente (100) umfasst, die um die innere Elektrode (51) bis hin zur äußeren Elektrode (52) gewickelt und untereinander durch Metallfolien (103) nacheinander in Reihe verbunden sind.

17. Gasisolierte Leitung nach Anspruch 16, bei der die innere Elektrode (51) und die äußere Elektrode (52) durch zwei dicht montierte seitliche isolierende Flansche (53, 54) gehalten sind.

18. Gasisolierte Leitung nach Anspruch 17, bei der jeder einheitliche Kondensator (5) mit einem druckbeaufschlagten dielektrischen Gas gefüllt ist.

19. Gasisolierte Leitung nach Anspruch 17, bei der jeder einheitliche Kondensator (5A) mit einem Öl gefüllt ist.

20. Anwendung der gasisolierten Leitung nach einem beliebigen der vorhergehenden Ansprüche zum Transport von einphasiger oder dreiphasiger elektrischer Energie.
